(19) Europäisches Patentamt
European Patent Office
Office européen des brevets

(11) **EP 2 318 812 B1**

(12) **EUROPÄISCHE PATENTSCHRIFT**

(45) Veröffentlichungstag und Bekanntmachung des Hinweises auf die Patenterteilung:
**26.11.2014 Patentblatt 2014/48**

(21) Anmeldenummer: **09780314.2**

(22) Anmeldetag: **08.07.2009**

(51) Int Cl.:
***G01D 5/38*** *(2006.01)*

(86) Internationale Anmeldenummer:
**PCT/EP2009/058667**

(87) Internationale Veröffentlichungsnummer:
**WO 2010/023017 (04.03.2010 Gazette 2010/09)**

(54) **OPTISCHE POSITIONSMESSEINRICHTUNG**

OPTICAL POSITION MEASURING DEVICE

DISPOSITIF OPTIQUE DE MESURE DE POSITION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.08.2008 DE 102008044858**

(43) Veröffentlichungstag der Anmeldung:
**11.05.2011 Patentblatt 2011/19**

(73) Patentinhaber: **Dr. Johannes Heidenhain GmbH 83301 Traunreut (DE)**

(72) Erfinder: **HERMANN, Michael 83342 Tacherting (DE)**

(56) Entgegenhaltungen:
**EP-A- 0 513 427        DE-A1- 19 748 802
DE-A1-102006 021 484**

**Beschreibung**

Die vorliegende Erfindung betrifft eine optische Positionsmesseinrichtung.

Aus der EP 513 427 A1 der Anmelderin ist eine optische Positionsmesseinrichtung bekannt, die zur Erfassung der Position von zwei relativ zueinander in mindestens einer Messrichtung beweglichen Objekten geeignet ist. Hierzu umfasst die bekannte Positionsmesseinrichtung eine Maßverkörperung, die mit einem der beiden Objekte verbunden ist. Die Maßverkörperung weist eine sich in Messrichtung erstreckende Inkrementalteilung sowie mindestens eine Referenzmarkierung an einer Referenzposition auf. Die Referenzmarkierung besteht aus einer Struktur mit einer sich örtlich veränderlichen Teilungsperiode, d.h. sie wird aus einer Struktur gebildet, die eine Vielzahl von verschiedenen Teilungsperioden umfasst. Derartige Strukturen werden auch als sog. gechirpte Teilungsstrukturen oder gechirpte Gitter bezeichnet. Ferner umfasst die Positionsmesseinrichtung eine Abtasteinheit, die mit dem anderen der beiden Objekte verbunden ist und Abtastmittel aufweist, die zur Erzeugung mindestens eines verschiebungsabhängigen Inkrementalsignals sowie mindestens eines Referenzsignals an einer Referenzposition über die optische Abtastung der Inkrementalteilung und der Referenzmarkierung entlang der Messstrecke dienen. Ein Referenzimpulssignal entsteht hierbei, wenn sich alle Signalfrequenzanteile, die durch die unterschiedlichen gechirpten Teilungsperioden der Maßverkörperung und der Abtastgitter entstehen, phasenrichtig überlagern.

In Figur 8 der EP 513 427 A1 ist eine spezielle Variante einer derart ausgebildeten gechirpten Referenzmarkierung offenbart, die zwei zu einer Symmetrieachse spiegelsymmetrisch angeordnete Referenzmarkierungs-Teilfelder umfasst. Die beiden Referenzmarkierungs-Teilfelder bestehen jeweils aus einer sich in Messrichtung erstreckenden Struktur mit einer sich örtlich veränderlichen Teilungsperiode.

Die aus der EP 513 427 A1 bekannte Positionsmesseinrichtung basiert auf einem sog. interferentiellen Abtastprinzip, bei dem das erste Gitter im Abtaststrahlengang kollimiert, d.h. mit einem parallel-gerichteten Strahlenbündel beleuchtet wird. Die verschiebungsabhängigen Abtastsignale in Form der Inkremental- und Referenzsignale werden aus der konstruktiven und destruktiven Überlagerung mehrerer Teilstrahlenbündel gewonnen, die im Fall der Relativbewegung von Maßverkörperung und Abtasteinheit verschiebungsabhängige Phasenverschiebungen erfahren. Auf diese Art und Weise lassen sich hochaufgelöste Positionsinformationen in Bezug auf die Relativposition der beiden Objekte gewinnen.

Ein hierzu alternatives Abtastprinzip für optische Positionsmesseinrichtungen ist beispielsweise aus der Veröffentlichung von R. Pettigrew mit dem Titel "Analysis of Grating Imaging and its Application to Displacement Metrology" in SPIE Vol. 36, 1st European Congress on Optics applied to Metrology (1977), S. 325 - 332 bekannt. Maßgeblich bei diesem Abtastprinzip ist die divergente, d.h. nicht-kollimierte Beleuchtung des ersten Gitters im Abtaststrahlengang.

Die DE 197 48 802 A1 der Anmelderin betrifft ebenfalls gechirpte Referenzmarkierungen in optischen Positionsmesseinrichtungen. Aus dieser Druckschrift ist desweiteren bekannt, dass sich derartige Referenzmarkierungen auch in Verbindung mit den vorgenannten Abtastprinzipien einsetzen lassen, also in Verbindung mit Systemen, die eine divergente Beleuchtung des ersten Gitters im Abtaststrahlengang vorsehen. Weder die DE 197 48 802 A1 noch die oben erwähnte EP 513 427 A1 geben jedoch Hinweise, wie eine optische Positionsmesseinrichtung mit divergenter Beleuchtung konkret auszubilden ist, wenn gechirpte Referenzmarkierungen verwendet werden sollen.

Aufgabe der vorliegenden Erfindung ist es, eine optische Positionsmesseinrichtung zu schaffen, bei der ein Abtastprinzip mit divergenter Beleuchtung verwendet wird und bei dem gechirpte Referenzmarkierungen zur Erzeugung hochauflösender Referenzsignale eingesetzt werden können.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen in den abhängigen Ansprüchen.

Die erfindungsgemäße optische Positionsmesseinrichtung dient zur Erfassung der Position von zwei relativ zueinander in mindestens einer Messrichtung beweglichen Objekten. Die Positionsmesseinrichtung weist eine Maßverkörperung auf, die mit einem der beiden Objekte verbunden ist, die eine sich in Messrichtung erstreckende Inkrementalteilung sowie mindestens eine Referenzmarkierung an einer Referenzposition besitzt. Die Referenzmarkierung umfasst zwei zu einer Referenzmarkierungs-Symmetrieachse spiegelsymmetrisch angeordnete Referenzmarkierungs-Teilfelder, die jeweils aus einer sich in Messrichtung erstreckenden Struktur mit einer sich örtlich veränderlichen Teilungsperiode bestehen. Ferner weist die Positionsmesseinrichtung eine Abtasteinheit auf, die mit dem anderen der beiden Objekte verbunden ist und der Abtastmittel zugeordnet sind, die zur Erzeugung mindestens eines Referenzsignals an der Referenzposition dienen. Die Abtastmittel umfassen mindestens eine divergent in Richtung der Maßverkörperung abstrahlende Lichtquelle sowie eine Detektoranordnung mit Elementen, die entlang der Messrichtung derart angeordnet sind, dass sich ausgehend von einer zentralen Detektoranordnungs-Symmetrieachse in Messrichtung die Mittenabstände zwischen benachbarten Elementen in der gleichen Richtung verändern wie ausgehend von der Referenzmarkierungs-Symmetrieachse die Teilungsperioden der Strukturen in den Referenzmarkierungs-Teilfeldern.

Auf diese Art und Weise kann auch bei einem Abtastprinzip mit divergenter Beleuchtung die Erzeugung eines hochauflösenden Referenzimpulssignals mittels gechirpter Gitterstrukturen sichergestellt werden. Besonders vorteilhaft erweist sich hierbei darüber hinaus, dass die erfindungsgemäße Referenzimpulserzeugung wenig empfindlich gegenüber Änderungen des Abtastabstands zwischen Maßverkörperung und Abtasteinheit ist. Ferner ist die Erzeugung des Referenzimpulssignals bei der erfindungsgemäßen Positionsmesseinrichtung relativ unempfindlich gegenüber Verschmutzungen, was auf die genutzte Einfeldabtastung zurückzuführen ist. Dies bedeutet, dass die verschiedenen Signalanteile stets aus einer Teilungsperiode der abgetasteten Referenzmarkierung stammen. Zudem wird bei der Erzeugung des Referenzimpulssignals das gesamte ausgeleuchtete Feld der Referenzmarkierung genutzt. Dies ist sehr effektiv und hat große Signalamplituden, eine hohe Unempfindlichkeit gegenüber Störungen sowie ein geringes Signalrauschen zur Folge.

In Bezug auf die erfindungsgemäße optische Positionsmesseinrichtung, gibt es vielfältige Ausführungsmöglichkeiten.

So sind die Referenzmarkierungsteilfelder der erfindungsgemäßen optischen Positionsmesseinrichtung vorzugsweise derart ausgebildet, dass benachbart zur Referenzmarkierungs-Symmetrieachse die Strukturen jeweils die kleinsten Teilungsperioden aufweisen und in Messrichtung nach außen hin jeweils stetig größer werdende Teilungsperioden vorgesehen sind.

In einer vorteilhaften Ausführungsform ist die maßverkörperungsseitige Teilungsfrequenz der sich örtlich verändernden Teilungsperioden in den beiden Referenzmarkierungs-Teilfelder folgendermaßen gewählt:

$$f_{MS}(x) := 2f_0\left(\frac{2}{L}x + 1\right) \quad \text{für} \ -\frac{L}{2} \le x < 0$$

und

$$f_{MS}(x) := \left| 2f_0\left(\frac{2}{L}x - 1\right) \right| \quad \text{für} \ 0 \le x \le \frac{L}{2},$$

wobei für L gilt:

$$L := \frac{n}{f_0},$$

n ganzzahlig,
mit:
$f_{MS}(x)$ := maßverkörperungsseitige Teilungsfrequenz in Abhängigkeit der Position in Messrichtung x
$f_0$ := mittlere maßverkörperungsseitige Teilungsfrequenz
L := Länge der Struktur im jeweiligen Referenzmarkierungs-Teilfeld in Messrichtung x

In einer möglichen Variante der erfindungsgemäßen optischen Positionsmesseinrichtung sind die Elemente der Detektoranordnung mit den nachfolgenden detektorseitigen Teilungsfrequenzen angeordnet:

$$f_{Det}(x) := \frac{2}{k}f_0\left(\frac{1}{L}x + 1\right) \quad \text{für} \ -L \le x < 0$$

und

$$f_{Det}(x) := \left| \frac{2}{k}f_0\left(\frac{1}{L}x - 1\right) \right| \quad \text{für} \ 0 \le x \le L,$$

mit:

$f_{Det}(x) :=$ detektorseitige Teilungsfrequenz in Abhängigkeit der Position in Messrichtung x

$f_0 :=$ mittlere maßverkörperungsseitige Teilungsfrequenz

$L :=$ Länge der der jeweiligen detektorseitigen Elementanordnung in Messrichtung x

$k := 1,2$

Es ist ferner möglich, die Elemente der Detektoranordnung entlang der Messrichtung derart anzuordnen, dass sie einem maßstäblich vergrößerten Abbild der Struktur aus den Referenzmarkierungs-Teilfeldern entsprechen.

Vorzugsweise wird die Ausdehnung der Lichtquelle in Messrichtung folgendermaßen gewählt:

$$b_{LQ} < \frac{1}{2f_0},$$

mit:

$b_{LQ} :=$ Ausdehnung der Lichtquelle in Messrichtung

$f_0 :=$ mittlere maßverkörperungsseitige Teilungsfrequenz

Es ist möglich, dass zwischen der Lichtquelle und der Maßverkörperung eine Blende mit einem Sendespalt angeordnet ist.

Hierbei kann die Ausdehnung des Sendespalts in Messrichtung folgendermaßen gewählt werden:

$$b_{SP} < \frac{1}{2f_0},$$

mit:

$b_{SP} :=$ Ausdehnung des Sendespalts in Messrichtung

$f_0 :=$ mittlere maßverkörperungsseitige Teilungsfrequenz

Vorzugsweise sind die Referenzmarkierung und die Inkrementalteilung als Phasengitter mit einem Phasenhub von 180° und einem Teilungsverhältnis von 1:1 ausgebildet.

Alternativ ist es aber auch möglich, dass die Referenzmarkierung und die Inkrementalteilung als Amplitudengitter oder als Phasengitter mit einem Phasenhub von 90° und einem Teilungsverhältnis von 1:1 ausgebildet sind.

Die Elemente der Detektoranordnung können als Array-Detektorelemente eines Detektorarrays ausgebildet sein.

Hierbei kann die Detektoranordnung einen ersten Satz von Array-Detektorelementen und einen zweiten Satz von Array-Detektorelementen umfassen, wobei jeweils die Array-Detektorelemente eines Satzes ausgangsseitig zusammengeschaltet sind.

Die Elemente der Detektoranordnung können aber auch als Teilungsbereiche eines Abtastgitters ausgebildet sein, denen mindestens ein großflächiges Detektorelement nachgeordnet ist.

Hierbei kann die Detektoranordnung zwei großflächige Detektorelemente umfassen, vor denen komplementär ausgestaltete Abtastgitter angeordnet sind.

Weitere Einzelheiten und Vorteile der vorliegenden Erfindung seien anhand der nachfolgenden Beschreibung von Ausführungsbeispielen erfindungsgemäßer optischer Positionsmesseinrichtungen in Verbindung mit den Figuren erläutert.

Es zeigt

Figur 1      eine stark schematisierte Darstellung des Abtaststrahlengangs zur Erzeugung eines Referenzimpulssignals in einem ersten Ausführungsbeispiel der erfindungsgemäßen Positionsmesseinrichtung;

Figur 2      eine Draufsicht auf die Maßverkörperung der Positionsmesseinrichtung aus Figur 1 mit der Inkrementalteilung und einer Referenzmarkierung;

Figur 3      eine schematisierte Teil-Ansicht der Detektionsebene der Positionsmesseinrichtung aus Figur 1 inklusive einer Verschaltungsmöglichkeit zur Erzeugung eines Referenzimpulssignals;

Figur 4a das aus einer Verschaltung gemäß Figur 3 resultierende Referenzimpuls-Taktsignal im Bereich der Referenzposition;

Figur 4b das aus einer Verschaltung gemäß Figur 3 resultierende Referenzimpuls-Gegentaktsignal im Bereich der Referenzposition;

Figur 4c das aus einer Verschaltung gemäß Figur 3 resultierende Referenzimpulssignal im Bereich der Referenzposition;

Figur 5 eine stark schematisierte Darstellung des Abtaststrahlengangs zur Erzeugung eines Referenzimpulssignals in einem zweiten Ausführungsbeispiel der erfindungsgemäßen Positionsmesseinrichtung;

Figur 6 eine Draufsicht auf die sendeseitig vorgesehenen Gitter in der Positionsmesseinrichtung der Figur 5;

Figur 7 eine stark schematisierte Darstellung des Abtaststrahlengangs zur Erzeugung eines Referenzimpulssignals in einem dritten Ausführungsbeispiel der erfindungsgemäßen Positionsmesseinrichtung;

Figur 8 eine Draufsicht auf die sendeseitig vorgesehenen Gitter in der Positionsmesseinrichtung der Figur 7;

Figur 9 eine schematisierte Teil-Ansicht der Detektionsebene eines vierten Ausführungsbeispiels der erfindungsgemäßen Positionsmesseinrichtung.

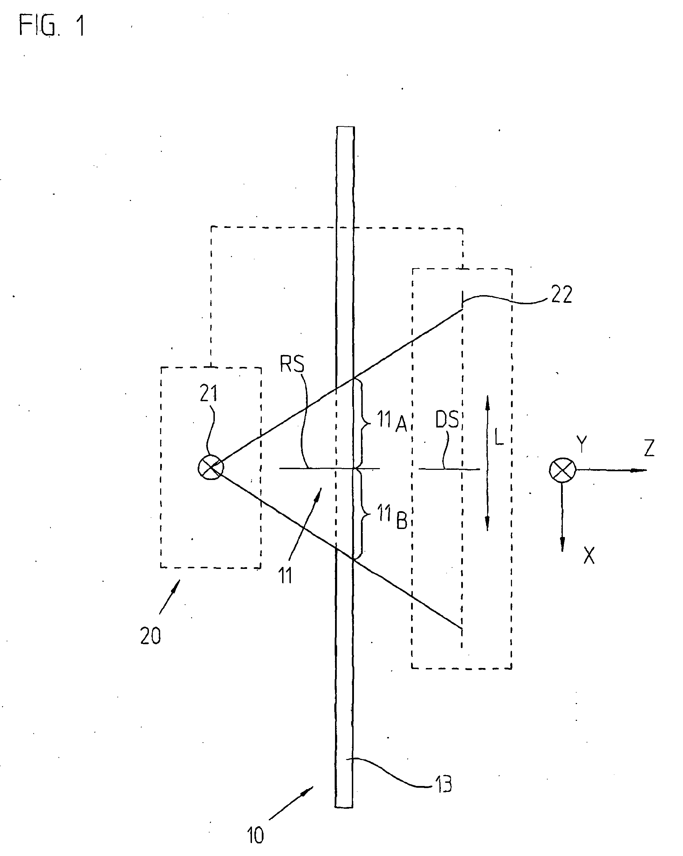

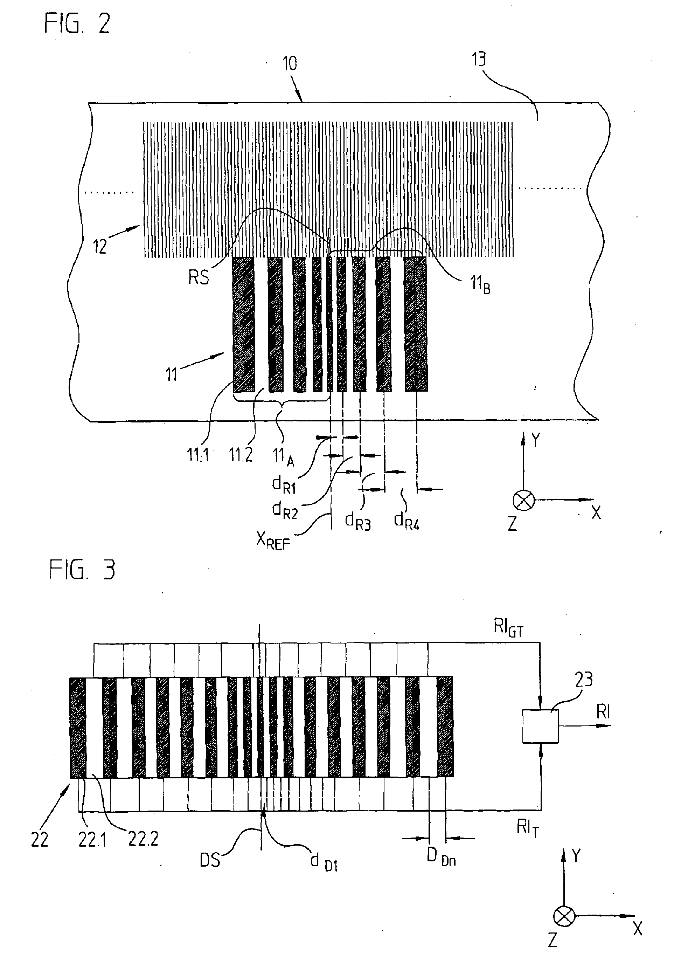

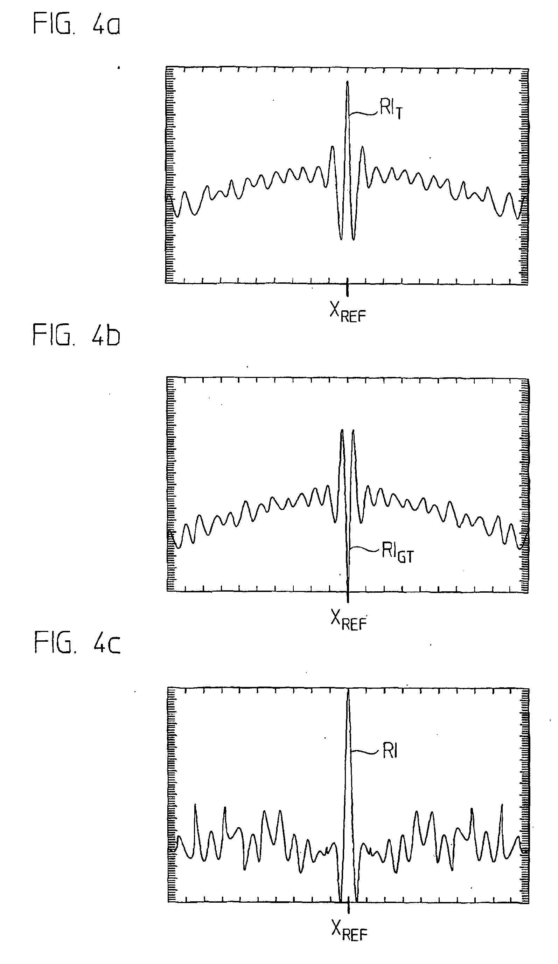

Anhand der Figuren 1, 2, 3 sowie 4a - 4c sei nachfolgend eine erste Ausführungsform der erfindungsgemäßen optischen Positionsmesseinrichtung im Detail beschrieben. Figur 1 zeigt hierbei in stark schematisierter Form den Abtaststrahlengang zur Erzeugung des Referenzimpulssignals, Figur 2 eine Draufsicht auf die Maßverkörperung im Bereich der Referenzmarkierung, Figur 3 eine Teil-Ansicht der Detektionsebene inklusive der Verschaltung zur Erzeugung des Referenzimpulssignals sowie die Figuren 4a - 4c verschiedene Signalverläufe im Bereich der Referenzposition.

Im dargestellten Ausführungsbeispiel ist die erfindungsgemäße optische Positionsmesseinrichtung als Durchlicht-Längenmessgerät ausgebildet und umfasst eine Abtasteinheit 20, die gegenüber der Maßverkörperung 10 in Messrichtung x beweglich angeordnet ist. Maßverkörperung 10 und Abtasteinheit 20 sind z.B. mit zwei zueinander in Messrichtung x beweglich angeordneten Objekten verbunden. Hierbei kann es sich beispielsweise um zwei zueinander bewegliche Maschinenteile handeln. Über die erzeugten, positionsabhängigen Ausgangssignale (Inkrementalsignale, Referenzimpulssignale) der erfindungsgemäßen optischen Positionsmesseinrichtung kann eine nachgeordnete Steuereinheit die Bewegung dieser Maschinenteile in bekannter Art und Weise geeignet steuern.

Die Darstellung in Figur 1 ist im übrigen stark schematisiert, insbesondere der für das Durchlichtsystem erforderliche Maßverkörperungs-Umgriff der Abtasteinheit 10 ist lediglich prinzipiell durch die strichlinierte Verbindung der lichtquellenseitigen Teile und der detektionsseitigen Teile der Abtasteinheit 10 angedeutet.

Die Maßverkörperung 10 umfasst im vorliegenden Beispiel eine sich in Messrichtung x erstreckende lineare Inkrementalteilung 12, die auf einem Teilungsträger 13 angeordnet ist. Die Inkrementalteilung 12 besteht aus periodisch mit der Teilungsperiode $TP_{INC} = 8\mu m$ in Messrichtung x angeordneten Teilbereichen mit unterschiedlichen optischen Eigenschaften, die sich in der Teilungsebene in y-Richtung erstrecken. Im dargestellten Beispiel ist die Inkrementalteilung 12 als Phasengitter mit einem Phasenhub von 180° und einem Teilungsverhältnis von 1:1 ausgebildet.

Benachbart zur Spur mit der Inkrementalteilung 12 ist auf Seiten der Maßverkörperung 10 eine Referenzmarkierung 11 an einer definierten Referenzposition $X_{REF}$ auf dem Teilungsträger 13 angeordnet; grundsätzlich können selbstverständlich auch an mehreren Referenzpositionen entsprechende Referenzmarkierungen angeordnet werden. Die Referenzmarkierung 11 ist wie die Inkrementalteilung 12 ebenfalls als Durchlicht-Phasengitter mit einem Phasenhub von 180° ausgebildet und besteht aus Strukturen mit alternierend angeordneten Teilbereichen 11.1, 11.2, die unterschiedliche phasenschiebende Wirkungen auf die einfallenden Strahlenbündel ausüben.

Wie aus den Figuren 1 und 2 ersichtlich ist, umfasst die Referenzmarkierung 11 an der Referenzposition $X_{REF}$ zwei zu einer Referenzmarkierungs-Symmetrieachse RS spiegelsymmetrisch angeordnete Referenzmarkierungs-Teilfelder $11_A$, $11_B$. Jedes der beiden Referenzmarkierungs-Teilfelder $11_A$, $11_B$ besteht aus einer sich in Messrichtung x erstreckenden Struktur bzw. Gitterteilungs-Struktur mit sich jeweils sich örtlich verändernden Teilungsperioden. Im dargestellten Beispiel weisen hierbei jeweils die Strukturen benachbart zur Referenzmarkierungs-Symmetrieachse SR die kleinsten Teilungsperioden auf, in Messrichtung x nach außen hin sind jeweils stetig größer werdende Teilungsperioden vorgesehen.

In diesem Zusammenhang sei insbesondere auf die Figur 2 verwiesen, in der die Abstände $d_{Ri}$ zwischen benachbarten Teilbereichen 11.1, 11.2 der Referenzmarkierung 11 im rechten Referenzmarkierungs-Teilfeld $11_B$ eingezeichnet sind. Wie ersichtlich gilt von der Referenzmarkierungs-Symmetrieachse RS ausgehend nach außen:

$$d_{R1} < d_{R2} < d_{R3} < d_{R4}$$

Die Strukturen in den beiden Referenzmarkierungs-Teilfeldern $11_A$, $11_B$ der Referenzmarkierung 11 sind demzufolge als sog. gechirpte Teilungsstrukturen ausgebildet, wobei ein zur Referenzmarkierungs-Symmetrieachse RS spiegelsymmetrischer Chirpverlauf in den beiden Referenzmarkierungs-Teilfeldern $11_A$, $11_B$ vorgesehen ist. Die Referenzmarkierung 11 besitzt erfindungsgemäß demnach eine symmetrisch gechirpte Struktur.

Der jeweilige Chirpverlauf lässt sich für das vorliegende Beispiel auch als maßverkörperungsseitige Teilungsfrequenz $f_{MS}(X)$ der sich örtlich verändernden Teilungsperioden in den beiden Referenzmarkierungs-Teilfeldern $11_A$, $11_B$ konkret angeben. So wird die Größe $f_{MS}(X)$ vorzugsweise folgendermaßen gewählt:

$$f_{MS}(x) := 2f_0\left(\frac{2}{L}x + 1\right) \quad \text{für } -\frac{L}{2} \le x < 0 \qquad \text{(Gl. 1.1)}$$

und

$$f_{MS}(x) := \left| 2f_0\left(\frac{2}{L}x - 1\right) \right| \quad \text{für } 0 \le x \le \frac{L}{2}, \qquad \text{(Gl. 1.2)}$$

wobei für L gilt:

$$L := \frac{n}{f_0}, \text{ n ganzzahlig,} \qquad \text{(Gl. 1.3)}$$

mit:

$f_{MS}(x) :=$ maßverkörperungsseitige Teilungsfrequenz in Abhängigkeit der Position in Messrichtung x
$f_0 :=$ mittlere maßverkörperungsseitige Teilungsfrequenz
$L :=$ Länge der Struktur im jeweiligen Referenzmarkierungs-Teilfeld in Messrichtung x

Zur Erzeugung der verschiebungsabhängigen Ausgangssignale in Form der periodischen Inkrementalsignale und des mindestens einen Referenzimpulssignals RI an mindestens einer definierten Referenzposition $X_{REF}$, sind in der Abtasteinheit 20 eine Reihe von Komponenten angeordnet, die der Einfachheit halber zusammenfassend als Abtastmittel bezeichnet seien. Zu den für die Erzeugung des Referenzimpulssignals RI nötigen Abtastmitteln gehören im vorliegenden Beispiel eine divergent in Richtung der Maßverkörperung 10 abstrahlende Lichtquelle 21 sowie eine speziell ausgebildete und auf die Referenzmarkierung 11 abgestimmte Detektoranordnung 22. Hierbei umfasst die Detektoranordnung 22 Elemente, die entlang der Messrichtung x derart angeordnet sind, dass sich ausgehend von einer zentralen Detektoranordnungs-Symmetriachse DS in Messrichtung x die Mittenabstände zwischen benachbarten Elementen in der gleichen Richtung verändern wie ausgehend von der Referenzmarkierungs-Symmetrieachse RS die Teilungsperioden der Strukturen in den beiden Referenzmarkierungs-Teilfeldern $11_A$, $11_B$. Die Detektoranordnung 22 besitzt demzufolge ebenso wie die Referenzmarkierung eine symmetrisch gechirpte Struktur bzgl. der Anordnung der entsprechenden Elemente.

Im dargestellten ersten Ausführungsbeispiel handelt es sich bei den Elementen der Detektoranordnung 22, die in definierter Art und Weise auf die Referenzmarkierung in der Detektionsebene abgestimmt angeordnet werden, um Array-Detektorelemente 22.1, 22.2 eines Detektorarrays, wie dies aus Figur 3 ersichtlich ist. Die Array-Detektorelemente 22.1, 22.2 sind hierbei üblicherweise als Photodioden in einem entsprechenden Photodiodenarray ausgebildet, besitzen eine rechteckförmige Form und sind entlang der Messrichtung x benachbart aneinandergrenzend angeordnet. Die Rechtecks-Längsachse erstreckt sich jeweils senkrecht zur Messrichtung x entlang der in der Figur angegebenen y-Richtung.

Alternativ zu einer derartigen Ausbildung der Detektoranordnung 22 ist es aber auch möglich, dass es sich bei den Elementen der Detektoranordnung 22 um die Teilungsbereiche eines Abtastgitters handelt, denen großflächige Detektorelemente nachgeordnet sind. In Bezug auf diese Möglichkeit sei auf die nachfolgende Beschreibung des vierten Ausführungsbeispiels verwiesen.

Wie aus Figur 3 ersichtlich ist, umfasst die Detektoranordnung 22 des ersten Ausführungsbeispiels einen ersten Satz von Array-Detektorelementen 22.1 sowie einen zweiten Satz von Array-Detektorelementen 22.2. Die Array-Detektorelemente 22.1, 22.2 des ersten und zweiten Satzes sind in Messrichtung alternierend angeordnet. Hierbei verändern sich die Mittenabstände $d_{D1}, ... d_{Dn}$ benachbarter Array-Detektorelemente 22.1, 22.2 ausgehend von der zentralen Detektoranordnungs-Symmetrieachse DS nach außen hin in der gleichen Richtung wie auf Seiten der Referenzmarkierung 11 die Teilungsperioden der Strukturen in den beiden Referenzmarkierungs-Teilfeldern $11_A$, $11_B$. Wie ferner in Figur 3 erkennbar, sind in unmittelbarer Nachbarschaft zur Detektoranordnungs-Symmetrieachse DS die kleinsten Mittenabstände und damit die in x-Richtung schmälsten Array-Detektorelemente 22.1, 22.2 vorgesehen, jeweils nach außen hin werden stetig breiter werdende Array-Detektorelemente 22.1, 22.2 platziert bzw. größer werdende Mittenabstände $d_{Dn}$ vorgesehen. Die prinzipiell symmetrisch gechirpte Anordnung der Elemente der Detektoranordnung 22, d.h. in diesem Fall der Array-Detektorelemente 22.1, 22.2 wird demzufolge erfindungsgemäß auf die ebenfalls symmetrisch gechirpte Anordnung der Strukturen der Referenzmarkierung 12 abgestimmt.

Wie ebenfalls aus Figur 3 ersichtlich ist, werden alle Array-Detektorelemente 22.1, 22.2 eines Satzes jeweils ausgangseitig zusammengeschaltet. Aus den Array-Detektorelementen 22.1 des ersten Satzes resultiert beim Überfahren der Referenzmarkierung 11 das sogenannte Referenzimpuls-Taktsignal $RI_T$, wie es in Figur 4a im Bereich der Referenzposition $X_{REF}$ dargestellt ist. Die Array-Detektorelemente 22.2 des zweiten Satzes liefern das sogenannte Referenzimpuls-Gegentaktsignal $RI_{GT}$, welches in Figur 4b im Bereich der Referenzposition $X_{REF}$ gezeigt ist. Das Referenzimpuls-Taktsignal $RI_T$ und das Referenzimpuls-Gegentaktsignal $RI_{GT}$ werden über das Differenzbildungselement 23 in Differenz verschaltet. Am Ausgang des Differenzbildungselementes 23 resultiert dann das Referenzimpulssignal RI, das zur Herstellung eines Absolutbezugs bei der Positionsmessung in bekannter Art und Weise weiterverarbeitbar ist; der Verlauf des derart erzeugten Referenzimpulssignals im Bereich der Referenzposition $X_{REF}$ ist in Figur 4c dargestellt.

Auch die Anordnung der Elemente der Detektoranordnung 22 lässt sich ähnlich wie die Charakterisierung der Referenzmarkierungs-Teilfelder $11_A$, $11_B$ mittels der Gleichungen 1.1 - 1.3 über die detektorseitigen Teilungsfrequenzen $f_{Det}(X)$ beschreiben, die den örtlich veränderbaren Verlauf der Mittenabstände der Elemente festlegt. Die Größe $f_{Det}(X)$ wird demnach vorzugsweise folgendermaßen gewählt:

$$f_{Det}(x) := \frac{2}{k} f_0 \left( \frac{1}{L} x + 1 \right) \quad \text{für } -L \leq x < 0 \qquad \text{(Gl. 2.1)}$$

und mit:

$$f_{Det}(x) := \left| \frac{2}{k} f_0 \left( \frac{1}{L} x - 1 \right) \right| \quad \text{für } 0 \leq x \leq L, \qquad \text{(Gl. 2.2)}$$

$f_{Det}(x)$ := detektorseitige Teilungsfrequenz in Abhängigkeit der Position in Messrichtung x
fo := mittlere maßverkörperungsseitige Teilungsfrequenz
L := Länge der der jeweiligen detektorseitigen Elementanordnung in Messrichtung x
k := 1, 2

Die Größe k in den Gleichungen 2.1 und 2.2 charakterisiert den Typ der jeweils gewählten optischen Abtastung, insbesondere welche von der Maßverkörperung erzeugten Beugungsordnungen zur Signalgewinnung beitragen.

So beschreibt k = 1 ein System, bei dem auf Seiten der Maßverkörperung 10 bzw. Inkrementalteilung 12 im wesentlichen +/- 1. Beugungsordnungen erzeugt werden. Die Inkrementalteilung 12 als auch die Referenzmarkierung 11 sind in diesem Fall als Phasengitter mit einem Phasenhub von 180° und einem Teilungsverhältnis von 1:1 ausgebildet.

Über k = 2 wird ein System charakterisiert, bei dem auf Seiten der Inkrementalteilung der Maßverkörperung neben den +/- 1. Beugungsordnungen auch eine 0. Beugungsordnung erzeugt wird und zur Signalgewinnung beiträgt. In diesem Fall gibt es dann detektionsseitig bestimmte Detektionsebenen, in denen ein maximaler Kontrast des aus der Abtastung der Maßverkörperung erzeugten Streifenmusters vorliegt. Eine hierzu geeignete Inkrementalteilung sowie die zugehörige Referenzmarkierung sind als Amplitudengitter ausgebildet oder aber als Phasengitter mit einem Phasenhub von 90° und einem Teilungsverhältnis von 1:1.

Im Zusammenhang mit der gechirpten Referenzmarkierung ist das erwähnte Teilungsverhältnis hierbei jeweils als lokales Teilungsverhältnis anzusehen.

Als vorteilhaft hat sich desweiteren herausgestellt, wenn in der erfindungsgemäßen optischen Positionsmesseinrichtung die Ausdehnung $b_{LQ}$ der Lichtquelle 21 in Messrichtung x gemäß der nachfolgenden Beziehung gewählt wird:

$$b_{LQ} < \frac{1}{2f_0} \qquad\qquad \text{(Gl. 3)}$$

mit:

$b_{LQ}$ := Ausdehnung der Lichtquelle in Messrichtung
$f_0$ := mittlere maßverkörperungsseitige Teilungsfrequenz

In einer konkreten Realisierung der ersten Ausführungsform einer erfindungsgemäßen optischen Positionsmesseinrichtung sind die folgenden Parameter vorgesehen:

$TP_{INC} = 8\mu m$ (Signalperiode = $4\mu m$)
$f_0 = 35/mm$
$L = 1mm$
$k = 1$

Als Lichtquelle 21 ist hierbei eine Punktlichtquelle vorgesehen, beispielsweise eine sog. VCSEL-Lichtquelle (Vertical Cavity Surface Emitting Laser).

Weitere Ausführungsformen der erfindungsgemäßen optischen Positionsmesseinrichtung werden nunmehr nachfolgend anhand der restlichen Figuren erläutert. Hierbei wird jeweils lediglich auf die maßgeblichen Unterschiede zum ersten Ausführungsbeispiel eingegangen, ansonsten sei auf die ausführliche Erläuterung des ersten Beispiels verwiesen, insbesondere auch auf die in diesem Zusammenhang erläuterten Dimensionierungsregeln.

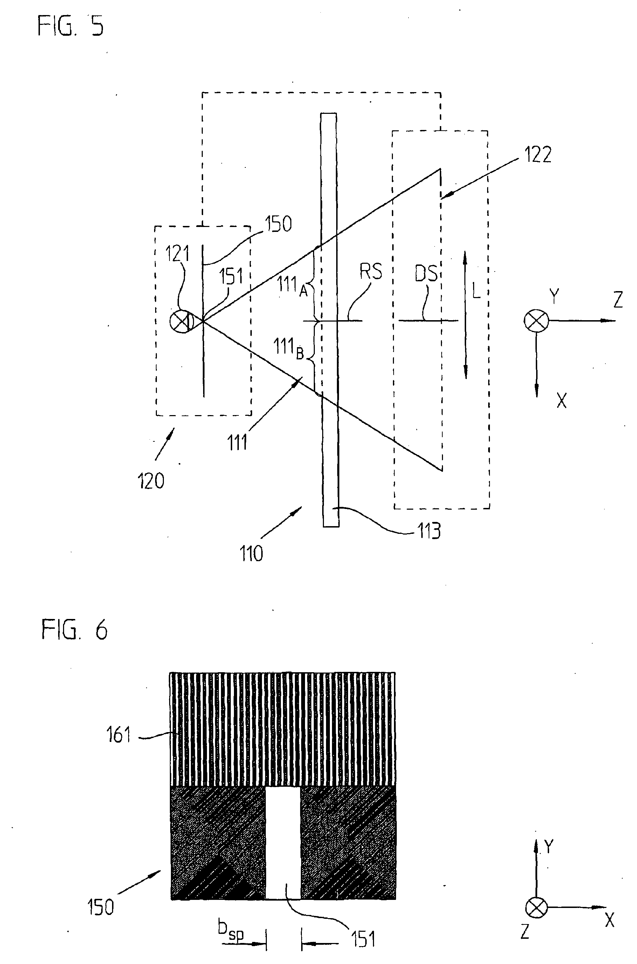

Eine zweite Ausführungsform der erfindungsgemäßen optischen Positionsmesseinrichtung ist in den Figuren 5 und 6 teilweise schematisiert dargestellt. Im Gegensatz zur konkreten ersten Ausführungsvariante wird nunmehr in der Abtasteinheit 200 keine punktförmige Lichtquelle 121 in Form einer VCSEL-Lichtquelle eingesetzt, sondern eine räumlich ausgedehnte Lichtquelle 121, die aber ebenfalls wiederum divergent in Richtung der Maßverkörperung 110 abstrahlt. Beispielsweise kann hierzu eine LED mit einer Kantenlänge von $300\mu m$ eingesetzt werden. Aufgrund der Verwendung der räumlich ausgedehnten Lichtquelle 121 ist nunmehr zusätzlich eine Blende 150 mit einem Sendespalt 151 der Breite b in Messrichtung x zwischen der Lichtquelle 121 und der Maßverkörperung 110 angeordnet, da das genutzte Abtastprinzip eine Punktlichtquelle voraussetzt.

Bzgl. der Ausdehnung b des Sendespalts 151 in Messrichtung x sollte vorzugsweise die nachfolgende Gleichung (4) beachtet werden:

$$b_{SP} < \frac{1}{2f_0} \qquad\qquad \text{(Gl. 4)}$$

In Figur 5 sind wiederum nur diejenigen Komponenten im Abtaststrahlengang dargestellt, die zur erfindungsgemäßen Erzeugung des Referenzimpulssignals RI dienen, nicht jedoch alle zur Erzeugung der Inkrementalsignale erforderlichen Komponenten.

In Figur 6 ist eine Draufsicht auf die Blende 150 dargestellt. Die Blende 150 umfasst neben dem bereits erwähnten Sendespalt 151 zur Erzeugung des Referenzimpulssignals RI desweiteren noch ein in $\gamma$-Richtung benachbart angeordnetes Sendegitter 161 für die Inkrementalabtastung.

In Bezug auf die Erzeugung eines Referenzimpulssignals RI ist auch in dieser Variante wiederum vorgesehen, auf der Maßverkörperung 110 eine Referenzmarkierung 111 mit symmetrisch gechirpten Strukturen in den beiden Referenzmarkierungs-Teilfeldern $111_A$, $111_B$ auszubilden. Die Abtastmittel auf Seiten der Abtasteinheit 120 umfassen wie schon im ersten Beispiel neben der divergenten Lichtquelle 121 eine Detektoranordnung 122 mit einer ebenfalls symmetrisch gechirpten Anordnung von Elementen, beispielsweise Array-Detektorelementen. In Bezug auf die konkreten Anordnungs-Gesetzmäßigkeiten sei wiederum auf die obigen Erläuterungen verwiesen.

In einer konkreten Realisierung der zweiten Ausführungsform einer erfindungsgemäßen optischen Positionsmesseinrichtung sind die folgenden Parameter vorgesehen:

$TP_{INC} = 8\mu m$ (Signalperiode = $4\mu m$)
$f_0 = 7.5/mm$
$L = 2.133mm$
$b_{SP} = 0.048mm$
$k = 1$

In dieser Ausführungsvariante resultiert ein Referenzimpulssignal, das erheblich breiter ist als die Signalperiode der Inkrementalsignale. Es ist daher erforderlich, das Referenzimpulssignal geeignet weiterzuverarbeiten, um ein Referenzimpulssignal mit der Breite einer Signalperiode der Inkrementalsignale zu erhalten.

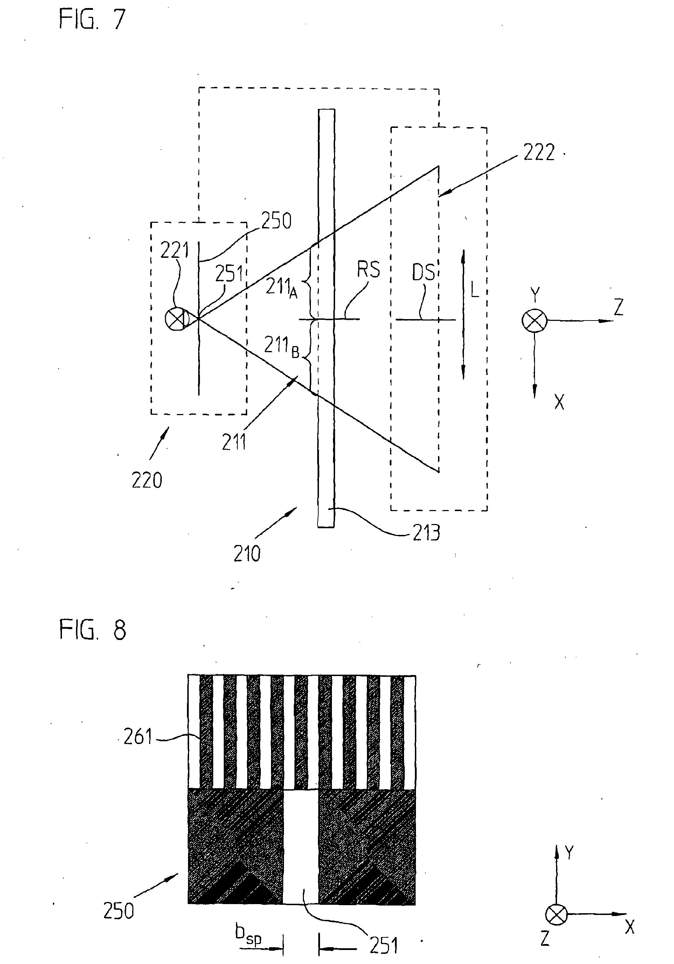

Eine weitere, dritte Ausführungsform der erfindungsgemäßen optischen Positionsmesseinrichtung ist in den Figuren 7 und 8 dargestellt.

Im Unterschied zu den bisher erläuterten Beispielen, in denen jeweils k = 1 gewählt wurde, ist nunmehr vorgesehen die Größe k = 2 zu wählen. Dies bedeutet, dass eine andere Maßverkörperung 221 zum Einsatz kommt. So ist nunmehr eine Inkrementalteilung mit einer deutlich größeren Teilungsperiode vorgesehen; bei der Signalgewinnung wird neben den +/- 1. Beugungsordnungen auch die erzeugte 0. Beugungsordnung verwendet.

Wie im zweiten Ausführungsbeispiel ist wiederum der Einsatz einer räumlich ausgedehnten, divergent abstrahlenden Lichtquelle 221 in der Abtasteinheit 220 vorgesehen, weshalb wiederum eine Blende 250 mit einem Sendespalt 251 der Breite $b_{SP}$ zwischen der Lichtquelle 221 und der Maßverkörperung 210 angeordnet ist.

Als weitere Besonderheit ist bei diesem Ausführungsbeispiel schließlich zu erwähnen, dass aufgrund des genutzten Abtastprinzips und der Nutzung der 0. Beugungsordnung nunmehr die Elemente der Detektoranordnung 222 entlang der Messrichtung x derart angeordnet sind, dass diese einem maßstäblich vergrößerten Abbild der Strukturen in den Referenzmarkierungs-Teilfeldern $211_A$, $211_B$ der Referenzmarkierung 211 entsprechen.

In Bezug auf die grundsätzliche Anordnung der Strukturen in den Referenzmarkierungs-Teilfeldern $211_A$, $211_B$ bzw. die Anordnung der Elemente in der Detektoranordnung 222 sei wiederum auf die Erläuterungen im Zusammenhang mit dem ersten Ausführungsbeispiel verwiesen.

Für eine konkrete Realisierung der dritten Ausführungsform einer erfindungsgemäßen optischen Positionsmesseinrichtung sind die folgenden Parameter vorgesehen:

Räumliche Ausdehnung der Lichtquelle (LED): $300\mu m$
$TP_{INC} = 20\mu m$ (Signalperiode = $20\mu m$)
$f_0 = 11/mm$
$L = 2mm$
$b_{SP} = 0.045mm$
$k=2$

Mit der Wahl dieser Parameter resultiert in diesem Beispiel ein Referenzimpulssignal, das eine Breite besitzt, die der Inkrementalsignal-Periode entspricht.

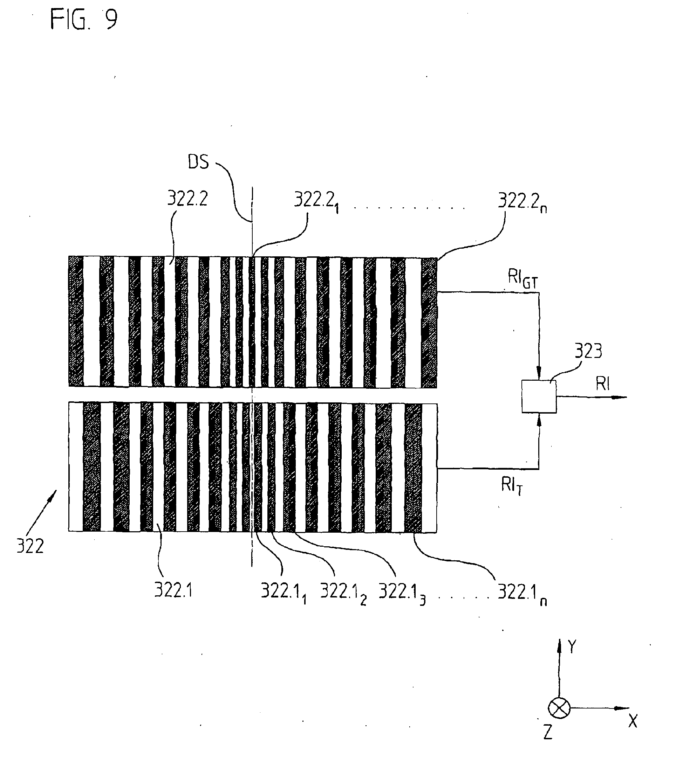

Abschließend sei ein viertes Ausführungsbeispiel der erfindungsgemäßen optischen Positionsmesseinrichtung anhand der Figur 9 erläutert. Diese zeigt in schematisierter Form eine Ansicht der Detektionsebene in der Abtasteinheit mit einer alternativen Variante der Detektoranordnung 322.

In den bislang erläuterten drei Ausführungsbeispielen waren die entsprechend gechirpt angeordneten Elemente der Detektoranordnung jeweils als Array-Detektorelemente eines geeigneten Detektorarrays ausgebildet. Im vierten Ausführungsbeispiel ist nunmehr vorgesehen, dass es sich bei den entsprechend gechirpt angeordneten Elementen der Detektoranordnung 322 um die Teilungsbereiche $323.1_1$ ...$323.1_n$ bzw. $323.1_1$ ...$323.1_n$ von Abtastgittern handelt, denen jeweils großflächige Detektorelemente 322.1, 322.2 nachgeordnet sind. Im dargestellten Ausführungsbeispiel umfasst die Detektoranordnung 322 zwei großflächige Detektorelemente 322.1, 322.2 die jeweils rechteckförmig ausgebildet sind, wobei sich die Rechtecks-Längsachse in Messrichtung x erstreckt. Aufgrund der komplementären Ausgestaltung der Abtastgitter mit den entsprechend gechirpt angeordneten Teilungsbereichen $323.1_1$ ...$323.1_n$ bzw. $323.2_1$ ...$323.2_n$ wird über das Detektorelement 322.1 das Referenzimpuls-Taktsignal $RI_T$ und über das über das Detektorelement 322.2 das gegenphasige Referenzimpuls-Gegentaktsignal $RI_{GT}$ erzeugt. Nach der Differenzbildung aus diesen beiden Signalen über das Differenzbildungselement 323 resultiert an dessen Ausgang das Referenzsignal RI.

Die symmetrisch zur Detektoranordnungs-Symmetrieachse DS vorgesehen Anordnung der Teilungsbereiche

$323.1_1 ...323.1_n$ bzw. $323.1_1 ...323.1_n$ entspricht für jedes Detektorelement 322.1, 322.1 den oben erläuterten Gesetzmäßigkeiten für die Elemente verschiedenen der Detektoranordnungen, die dort jeweils als Array-Detektorelemente ausgebildet waren.

Eine derartige Variante zur Ausbildung der Detektoranordnung 322 kann beispielsweise dann in Betracht kommen, wenn relativ schmale Array-Detektorelemente erforderlich würden und diese technologiebedingt nicht mehr herstellbar sind. Grundsätzlich gibt es für derartige Detektorarrays bestimmte Minimalbreiten bzw. -abstände, die aufgrund technologischer Begrenzungen nicht unterschritten werden können. Demgegenüber ist es weniger problematisch entsprechend fein strukturierte Abtastgitter auf großflächigen Detektorelementen aufzubringen, die in Bezug auf die optische Abtastung gleichwertig funktionieren.

Neben den bislang erläuterten Ausführungsbeispielen gibt es im Rahmen der vorliegenden Erfindung selbstverständlich noch weitere Ausgestaltungsmöglichkeiten für die erfindungsgemäße optische Positionsmesseinrichtung.

So kann die erfindungsgemäße Positionsmesseinrichtung sowohl als Längenmessgerät zur Erfassung von linearen Verschiebebewegungen ausgebildet werden wie auch als rotatorisches Positionsmessgerät zur Erfassung von Rotationsbewegungen um eine Rotationsachse.

Ebenso ist es natürlich möglich, neben den erläuterten Durchlichtvarianten entsprechend aufgebaute Auflichtvarianten mit abgetasteten Reflexions-Maßverkörperungen erfindungsgemäß auszubilden.

**Patentansprüche**

1. Optische Positionsmesseinrichtung zur Erfassung der Position von zwei relativ zueinander in mindestens einer Messrichtung (x) beweglichen Objekten mit

   - einer Maßverkörperung (10; 110; 210), die mit einem der beiden Objekte verbunden ist und die eine sich in Messrichtung (x) erstreckende Inkrementalteilung (12) sowie mindestens eine Referenzmarkierung (11; 111; 211) an einer Referenzposition ($X_{REF}$) aufweist, wobei die Referenzmarkierung (11; 111; 211) zwei zu einer Referenzmarkierungs-Symmetrieachse (RS) spiegelsymmetrisch angeordnete Referenzmarkierungs-Teilfelder ($11_A$, $11_B$; $111_A$, $111_B$; $211_A$, $211_B$) umfasst, die jeweils aus einer sich in Messrichtung (x) erstreckenden Struktur mit einer sich örtlich veränderlichen Teilungsperiode bestehen,
   - einer Abtasteinheit (20; 120; 220), die mit dem anderen der beiden Objekte verbunden ist und der Abtastmittel zugeordnet sind, die zur Erzeugung mindestens eines Referenzsignals (RI) an der Referenzposition ($X_{REF}$) dienen,
   **dadurch gekennzeichnet,**
   **dass** die Abtastmittel mindestens folgende Komponenten umfassen:

   - eine divergent in Richtung der Maßverkörperung (10; 110; 210) abstrahlende Lichtquelle (21; 121; 221),
   - eine Detektoranordnung (22; 122; 222) mit Elementen, die entlang der Messrichtung (x) derart angeordnet sind, dass sich ausgehend von einer zentralen Detektoranordnungs-Symmetrieachse (DS) in Messrichtung (x) die Mittenabstände ($d_{D1},...d_{Dn}$) zwischen benachbarten Elementen in der gleichen Richtung verändern wie ausgehend von der Referenzmarkierungs-Symmetrieachse (RS) die Teilungsperioden der Strukturen in den Referenzmarkierungs-Teilfeldern ($11_A$, $11_B$; $111_A$, $111_B$; $211_A$, $211_B$).

2. Optische Positionsmesseinrichtung nach Anspruch 1, **dadurch gekennzeichnet, dass** die Referenzmarkierungs-Teilfelder (11A, 11B; 111A, $111_B$; $211_A$, $211_B$) derart ausgebildet sind, dass benachbart zur Referenzmarkierungs-Symmetrieachse (RS) die Strukturen jeweils die kleinsten Teilungsperioden aufweisen und in Messrichtung (x) nach außen hin jeweils stetig größer werdende Teilungsperioden vorgesehen sind.

3. Optische Positionsmesseinrichtung nach Anspruch 1, **dadurch gekennzeichnet, dass** die maßverkörperungsseitige Teilungsfrequenz ($f_{MS}$ (x)) der sich örtlich verändernden Teilungsperioden in den beiden Referenzmarkierungs-Teilfeldern ($11_A$, $11_B$; $111_A$, $111_B$; $211_A$, $211_B$) folgendermaßen gewählt ist:

$$f_{MS}(x) := 2f_0\left(\frac{2}{L}x + 1\right) \quad \text{für} \quad -\frac{L}{2} \leq x < 0$$

und

$$f_{MS}(x) := \left| 2f_0\left(\frac{2}{L}x - 1\right) \right| \quad \text{für } 0 \le x \le \frac{L}{2},$$

wobei für L gilt:

$$L := \frac{n}{f_0},$$

n ganzzahlig,
mit:

$f_{MS}(x)$ := maßverkörperungsseitige Teilungsfrequenz in Abhängigkeit der Position in Messrichtung x
$f_0$ := mittlere maßverkörperungsseitige Teilungsfrequenz
L := Länge der Struktur Im jeweiligen Referenzmarkierungs-Teilfeld in Messrichtung x

4. Optische Positionsmesseinrichtung nach Anspruch 1, **dadurch gekennzeichnet, dass** die Elemente der Detektoranordnung (22; 122; 222) mit den nachfolgenden detektorseitigen Teilungsfrequenzen ($f_{Det}(x)$) angeordnet sind:

$$f_{Det}(x) := \frac{2}{k}f_0\left(\frac{1}{L}x + 1\right)$$

für -L≤x<0 und

$$f_{Det}(x) := \left| \frac{2}{k}f_0\left(\frac{1}{L}x - 1\right) \right.$$

| für $0 \le x \le L$, mit:
$f_{Det}(x)$ := detektorseitige Teilungsfrequenz in Abhängigkeit der Position in Messrichtung x
$f_0$ := mittlere maßverkörperungsseitige Teilungsfrequenz L := Länge der der jeweiligen detektorseitigen Element-Anordnung in Messrichtung x
k := 1, 2

5. Optische Positionsmesseinrichtung nach Anspruch 1, **dadurch gekennzeichnet, dass** die Elemente der Detektoranordnung (222)entlang der Messrichtung (x) derart angeordnet sind, dass sie einem maßstäblich vergrößerten Abbild der Struktur aus den Referenzmarkierungs-Teilfeldern ($211_A$, $211_B$) entsprechen.

6. Optische Positionsmesseinrichtung Anspruch 1, **dadurch gekennzeichnet, dass** die Ausdehnung der Lichtquelle (21; 121; 221) in Messrichtung (x) folgendermaßen gewählt ist:

$$b_{LQ} < \frac{1}{2f_0},$$

mit:

$b_{LQ}$ := Ausdehnung der Lichtquelle in Messrichtung
$f_0$ := mittlere maßverkörperungsseitige Teilungsfrequenz

7. Optische Positionsmesseinrichtung nach mindestens einem der vorhergehenden Ansprüche, **dadurch gekennzeichnet, dass** zwischen der Lichtquelle (121; 221) und der Maßverkörperung (110; 210) eine Blende (150; 250) mit einem Sendespalt (151; 251) angeordnet ist.

8. Optische Positionsmesseinrichtung nach Anspruch 7, **dadurch gekennzeichnet, dass** die Ausdehnung des Sendespalts (151; 251) in Messrichtung (x) folgendermaßen gewählt ist:

$$b_{SP} < \frac{1}{2f_0},$$

mit:

$b_{SP}$ := Ausdehnung des Sendespalts in Messrichtung
$f_0$ := mittlere maßverkörperungsseitige Teilungsfrequenz

9. Optische Positionsmesseinrichtung nach mindestens einem der vorhergehenden Ansprüche, **dadurch gekennzeichnet, dass** die Referenzmarkierung (11; 111; 211) und die Inkrementalteilung (12) als Phasengitter mit einem Phasenhub von 180° und einem Teilungsverhältnis von 1:1 ausgebildet sind.

10. Optische Positionsmesseinrichtung nach mindestens einem der Ansprüche 1 - 7, **dadurch gekennzeichnet, dass** die Referenzmarkierung (11; 111; 211) und die Inkrementalteilung (12) als Amplitudengitter oder als Phasengitter mit einem Phasenhub von 90° und einem Teilungsverhältnis von 1:1 ausgebildet sind.

11. Optische Positionsmesseinrichtung nach mindestens einem der vorhergehenden Ansprüche, **dadurch gekennzeichnet, dass** die Elemente der Detektoranordnung (22; 122; 222) als Array-Detektorelemente (22.1, 22.2) eines Detektorarrays ausgebildet sind.

12. Optische Positionsmesseinrichtung nach Anspruch 11, **dadurch gekennzeichnet, dass** die Detektoranordnung (22; 122; 222) einen ersten Satz von Array-Detektorelementen (22.1) und einen zweiten Satz von Array-Detektorelementen (22.1) umfasst und jeweils die Array-Detektorelemente (22.1, 22.2) eines Satzes ausgangsseitig zusammengeschaltet sind.

13. Optische Positionsmesseinrichtung nach Anspruch 1, **dadurch gekennzeichnet, dass** die Elemente der Detektoranordnung (322) als Teilungsbereiche ($323.1_1$ ...$323.1_n$, $323.1_1$ ...$323.1_n$) eines Abtastgitters ausgebildet sind, deren mindestens ein großflächiges Detektorelement (322.1, 322.2) nachgeordnet ist.

14. Optische Positionsmesseinrichtung nach Anspruch 1, **dadurch gekennzeichnet, dass** die Detektoranordnung (322) zwei großflächige Detektorelemente (322.1, 322.2) umfasst, vor denen komplementär ausgestaltete Abtastgitter angeordnet sind.

## Claims

1. Optical position measuring device for acquiring the position of two objects movable relative to one another in at least one measuring direction (x), comprising

- a material measure (10; 110; 210) which is connected to one of the two objects and which has an incremental scale (12) extending in the measuring direction (x), and at least one reference mark (11; 111; 211) at a reference position ($X_{REF}$), the reference mark (11; 111; 211) comprising two reference mark subfields ($11_A$, $11_B$; $111_A$, $111_B$; $211_A$, $211_B$) arranged with mirror symmetry relative to a reference mark axis of symmetry (RS) which respectively consist of a structure, extending in the measuring direction (x), with a spatially varying graduation period, and
- a scanning unit (20; 120; 220) which is connected to the other of the two objects and is assigned to the scanning means, which serve to generate at least one reference signal (RI) at the reference position ($X_{REF}$), **characterized in that** the scanning means comprise at least the following components:
- a light source (21; 121; 221) emitting divergently in the direction of the material measure (10; 110; 210),

- a detector arrangement (22; 122; 222) with elements which are arranged along the measuring direction (x) in such a way that, proceeding in the measuring direction (x) from a central axis of symmetry (DS) of a detector arrangement, the centre distances ($d_{D1}$, ... $d_{Dn}$) vary in the same direction between adjacent elements as do the graduation periods of the structures in the reference mark subfields ($11_A$, $11_B$; $111_A$, $111_B$; $211_A$, $211_B$) in a fashion proceeding from the reference mark axis of symmetry (RS).

2.  Optical position measuring device according to Claim 1, **characterized in that** the reference mark subfields ($11_A$, $11_B$; $111_A$, $111_B$; $211_A$, $211_B$) are designed in such a way that the structures respectively have the smallest graduation periods adjacent to the reference mark axis of symmetry (RS), and graduation periods which each increase continuously outwards are provided in the measuring direction (x).

3.  Optical position measuring device according to Claim 1, **characterized in that** the graduation frequency ($f_{MS}$ (x)) of the spatially varying graduation periods is selected as follows in the two reference mark subfields ($11_A$, $11_B$; $111_A$, $111_B$; $211_A$, $211_B$) on the material measure side:

$$f_{MS}(x) := 2 f_0 \left( \frac{2}{L} x + 1 \right) \text{ for } -\frac{L}{2} \le x < 0$$

and

$$f_{MS}(x) := \left| \, 2 f_0 \left( \frac{2}{L} x - 1 \right) \right| \quad \text{for } 0 \le x \le \frac{L}{2},$$

in which case it holds true for L that:

$$L := \frac{n}{f_0},$$

n being integral, where:

$f_{MS}$ (x): = graduation frequency on the material measure side as a function of the position in the measuring direction x
$f_0$: = mean graduation frequency on the material measure side, and
L: = length of the structure in the respective reference mark subfield in the measuring direction x.

4.  Optical position measuring device according to Claim 1, **characterized in that** the elements of the detector arrangement (22; 122; 222) are arranged with the following graduation frequencies ($f_{Det}$ (x)) on the detector side:

$$f_{Det}(x) := \frac{2}{k} f_0 \left( \frac{1}{L} x + 1 \right) \text{ for } -L \le x < 0$$

and

$$f_{Det}(x) := \left| \frac{2}{k} f_0 \left( \frac{1}{L} x - 1 \right) \right| \text{ for } 0 \le x \le L,$$

where:

$f_{Det}(x)$: = graduation frequency as a function of the position in the measuring direction x on the detector side,
$f_0$: = mean graduation frequency on the material measure side,
L: = length of the respective element arrangement in the measuring direction x on the detector side, and
k: = 1, 2

5. Optical position measuring device according to Claim 1, **characterized in that** the elements of the detector arrangement (222) are arranged along the measuring direction (x) in such a way that they correspond to an image, enlarged to scale, of the structure from the reference mark subfields ($211_A$, $211_B$).

6. Optical position measuring device according to Claim 1, **characterized in that** the extent of the light source (21; 121; 221) is selected as follows in the measuring direction (x):

$$b_{LQ} < \frac{1}{2f_0},$$

where:

$b_{LQ}$: = extent of the light source in the measuring direction, and
$f_0$: = mean graduation frequency on the material measure side.

7. Optical position measuring device according to at least one of the preceding claims, **characterized in that** a diaphragm (150; 250) with a transmission gap (151; 251) is arranged between the light source (121; 221) and the material measure (110; 210).

8. Optical position measuring device according to Claim 7, **characterized in that** the extent of the transmission gap (151; 251) in the measuring direction (x) is selected as follows:

$$b_{SP} < \frac{1}{2f_0},$$

where:

$b_{SP}$: = extent of the transmission gap in the measuring direction, and
$f_0$: = mean graduation frequency on the material measure side.

9. Optical position measuring device according to at least one of the preceding claims, **characterized in that** the reference mark (11; 111; 211) and the incremental scale (12) are designed as a phase grating with a phase deviation of 180° and a graduation ratio of 1:1.

10. Optical position measuring device according to at least one of Claims 1-7, **characterized in that** the reference mark (11; 111; 211) and the incremental scale (12) are designed as amplitude gratings or as phase gratings with a phase deviation of 90° and a graduation ratio of 1:1.

11. Optical position measuring device according to at least one of the preceding claims, **characterized in that** the elements of the detector arrangement (22; 122; 222) are designed as array detector elements (22.1, 22.2) of a detector array.

**12.** Optical position measuring device according to Claim 11, **characterized in that** the detector arrangement (22; 122; 222) comprises a first set of array detector elements (22.1) and a second set of array detector elements (22.1), and the array detector elements (22.1, 22.2) of a set are respectively interconnected on the output side.

**13.** Optical position measuring device according to Claim 1, **characterized in that** the elements of the detector arrangement (322) are designed as graduation regions ($323.1_1$ ... $323.1_n$, $323.1_1$ ... $323.1_n$) of a scanning grating, downstream of which at least one large-surface detector element (322.1, 322.2) is arranged.

**14.** Optical position measuring device according to Claim 1, **characterized in that** the detector arrangement (322) comprises two large-surface detector elements (322.1, 322.2) upstream of which scanning gratings of complementary configuration are arranged.

**Revendications**

**1.** Dispositif de mesure optique de position destiné à détecter la position de deux objets mobiles l'un par rapport à l'autre dans une direction de mesure (x), comportant :

- un corps d'étalonnage (10 ; 110 ; 210) qui est relié aux deux objets et qui comporte une division incrémentielle (12) s'étendant dans la direction de mesure (x) ainsi qu'au moins un marquage de référence (11 ; 111 ; 211) à une position de référence ($X_{REF}$), dans lequel le marquage de référence (11 ; 111 ; 211) comprend deux champs partiels de marquage de référence ($11_A$, $11_B$ ; $111_A$, $111_B$ ; $211_A$, $211_B$) disposés de manière symétrique dans un miroir par rapport à un axe de symétrie de marquage de référence (RS), lesquels champs partiels sont respectivement constitués d'une structure s'étendant dans la direction de mesure (x) et ayant une période de division variant localement,
- une unité de balayage (20 ; 120 ; 220) qui est reliée à l'autre des deux objets et est associée à des moyens de balayage qui sont destinés à générer au moins un signal de référence (RI) à la position de référence ($X_{REF}$), **caractérisé en ce que** les moyens de balayage comprennent au moins les composants suivants :
- une source lumineuse (21 ; 121 ; 221) rayonnant dans la direction du corps d'étalonnage (10 ; 110 ; 210),
- un dispositif détecteur (22 ; 122 ; 222) comportant des éléments qui sont agencés suivant la direction de mesure (x) de telle manière que les distances centre-à-centre ($d_{D1}$, ... $d_{Dn}$) entre des éléments voisins dans la direction de mesure (x) varient par rapport à un axe de symétrie central (DS) du dispositif détecteur dans la même direction que les périodes de division des structures dans les champs partiels de marquage de référence ($11_A$, $11_B$ ; $111_A$, $111_B$ ; $211_A$, $211_B$) par rapport à l'axe de symétrie (RS) du marquage de référence.

**2.** Dispositif de mesure optique de position selon la revendication 1, **caractérisé en ce que** les champs partiels de marquage de référence ($11_A$, $11_B$ ; $111_A$, $111_B$ ; $211_A$, $211_B$) sont conçus de telle manière qu'au voisinage de l'axe de symétrie (RS) du marquage de référence, les structures présentent respectivement les périodes de division les plus petites et que des périodes de division respectives croissant régulièrement vers l'extérieur soient présentes dans la direction de mesure (x).

**3.** Dispositif de mesure optique de position selon la revendication 1, **caractérisé en ce que** la fréquence de division ($f_{MS}$ (x)), du côté du corps d'étalonnage, des périodes de division variant localement est sélectionnée dans les deux champs partiels du marquage de référence ($11_A$, $11_B$ ; $111_A$, $111_B$ ; $211_A$, $211_B$) de la manière suivante :

$$f_{MS}(x) := 2f_0\left(\frac{2}{L}x + 1\right) \text{ pour } -\frac{L}{2} \leq x < 0$$

et

$$f_{MS}(x) := \left| \; 2f_0\left(\frac{2}{L}x - 1\right) \right| \quad \text{pour } 0 \leq x \leq \frac{L}{2} \, ,$$

où L est tel que :

$$L := \frac{n}{f_0} \, ,$$

n étant un entier,
avec :

$f_{MS}(x) :=$ fréquence de division du côté du corps d'étalonnage en fonction de la position dans la direction de mesure x,
$f_0 :=$ fréquence de division moyenne du côté du corps d'étalonnage,
$L :=$ longueur de la structure dans le champ partiel respectif du marquage de référence dans la direction de mesure x.

4.  Dispositif de mesure optique de position selon la revendication 1, **caractérisé en ce que** les éléments du dispositif détecteur (22 ; 122 ; 222) sont agencés avec les fréquences de division ($f_{Det}(x)$) suivantes du côté du détecteur :

$$f_{Det}(x) := \frac{2}{k} f_0\left(\frac{1}{L}x + 1\right) \quad \text{pour } -L \leq x < 0$$

et

$$f_{Det}(x) := \left| \; \frac{2}{k} f_0\left(\frac{1}{L}x - 1\right) \right| \quad \text{pour } 0 \leq x \leq L \, ,$$

avec :

$f_{Det}(x) :=$ fréquence de division du côté du corps d'étalonnage en fonction de la position dans la direction de mesure x,
$f_0 :=$ fréquence de division moyenne du côté du corps d'étalonnage,
$L :=$ longueur de la structure dans le champ partiel respectif du marquage de référence dans la direction de mesure x,
$k := 1, 2$

5.  Dispositif de mesure optique de position selon la revendication 1, **caractérisé en ce que** les éléments du dispositif détecteur (222) sont agencés dans la direction, de mesure (x) de telle manière qu'ils correspondent à une image à échelle agrandie de la structure constituée des champs partiels du marquage de référence ($211_A$, $211_B$).

6.  Dispositif optique de mesure de position selon la revendication 1, **caractérisé en ce que** l'extension de la source lumineuse (21 ; 121 ; 221) dans la direction de mesure (x) est sélectionnée de la manière suivante :

$$b_{LQ} < \frac{1}{2f_0} \, ,$$

avec :

$b_{LQ}$ := extension de la source lumineuse dans la direction de mesure,
$f_0$ := fréquence de division moyenne du côté du corps d'étalonnage.

7. Dispositif de mesure optique de position selon au moins l'une des revendications précédentes, **caractérisé en ce qu'**un diaphragme (150 ; 250) comportant un interstice d'émission (151 ; 251) est disposé entre la source lumineuse (121 ; 221) et le corps d'étalonnage (110 ; 210).

8. Dispositif de mesure optique de position selon la revendication 7, **caractérisé en ce que** l'extension de l'interstice d'émission (151 ; 251) dans la direction de mesure (x) est sélectionnée de la manière suivante :

$$b_{SP} < \frac{1}{2f_0},$$

avec :

$b_{SP}$ := extension de l'interstice d'émission dans la direction de mesure,
$f_0$ := fréquence de division moyenne du côté du corps d'étalonnage.

9. Dispositif de mesure optique de position selon au moins l'une des revendications précédentes, **caractérisé en ce que** le marquage de référence (11 ; 111 ; 211) et la division incrémentielle (12) sont réalisés sous la forme d'un réseau de phase ayant un déphasage de 180° et un rapport de division de 1:1.

10. Dispositif de mesure optique de position selon au moins l'une des revendications 1 - 7, **caractérisé en ce que** le marquage de référence (11 ; 111 ; 211) et la division incrémentielle (12) sont réalisés sous la forme d'un réseau d'amplitude ou d'un réseau de phase ayant un déphasage de 90° et un rapport de division de 1:1.

11. Dispositif de mesure optique de position selon au moins l'une des revendications précédentes, **caractérisé en ce que** les éléments du dispositif détecteur (22 ; 122 ; 222) sont réalisés sous la forme d'éléments détecteurs (22.1, 22.2) d'un réseau de détecteurs.

12. Dispositif de mesure optique de position selon la revendication 11, **caractérisé en ce que** le dispositif détecteur (22 ; 122 ; 222) comprend un premier ensemble d'éléments détecteurs de réseau (22.1) et un second ensemble d'éléments détecteurs de réseau (22.1) et **en ce que** les éléments détecteurs de réseau respectifs (22.1, 22.2) d'un ensemble sont interconnectés du côté de la sortie.

13. Dispositif de mesure optique de position selon la revendication 1, **caractérisé en ce que** les éléments du dispositif détecteur (322) sont réalisés sous la forme de zones de division ($323.1_1$ ... $323.1_n$, $323.1_1$ ... $323.1_n$) d'un réseau de balayage en aval duquel est disposé au moins un élément détecteur de grande surface (322.1, 322.2).

14. Dispositif de mesure optique de position selon la revendication 1, **caractérisé en ce que** le dispositif détecteur (322) comprend deux éléments détecteurs de grande surface (322.1, 322.2) en amont desquels sont disposés des réseaux de balayage conçus de manière complémentaire.

FIG. 1

FIG. 2

FIG. 3

FIG. 4a

$X_{REF}$

FIG. 4b

$X_{REF}$

FIG. 4c

$X_{REF}$

EP 2 318 812 B1

FIG. 5

FIG. 6

21

FIG. 7

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 513427 A1

- DE 19748802 A1

**In der Beschreibung aufgeführte Nicht-Patentliteratur**

- **R. PETTIGREW.** Analysis of Grating Imaging and its Application to Displacement Metrology. *SPIE Vol. 36, 1st European Congress on Optics applied to Metrology,* vol. 36, 325-332